# EUROPÄISCHE PATENTANMELDUNG

(11) **EP 1 201 499 A1**
(43) Veröffentlichungstag der Anmeldung: **02.05.2002**
(21) Anmeldenummer: 00250359.7
(22) Anmeldetag: 27.10.2000
(51) Int. Cl.: B60Q 1/14

(54) **Kraftfahrzeugfahrleuchten-helligkeits- und positions-sensorschaltautomatik mit interventionsmitteln**

(71) Anmelder: Slamecka, Ernst, 13595 Berlin (DE)
(72) Erfinder: Slamecka, Ernst, 13595 Berlin (DE)

(57) **Zusammenfassung**

Bei nur einem, optimal über einer Straßentunneleinfahrt (31) postierten Sender mit Antenne (7.3) zum Ausstrahlen von Positionssignalen bleiben die Fahrleuchten eines auf den Tunnel zufahrenden Kraftfahrzeugs bis nach der Ausfahrt eingeschaltet dank örtlich koordinierten Schaltens eines auf die Positionssignale reagierenden Positionssensorschalters und eines auf die Umgebungshelligkeit reagierenden Photosensorschalters, was z.B. automatisch die kontinuierliche Licht-spur (100) - (101) - (102) - (97) - (92) - (93) ergibt.

Die Betriebszeitbereiche des vorzugsweise mit Solarenergie betriebenen Positionssignalsenders einschließlich Positionssensorschalter und des Photosensorschalters sind nach Tageshelligkeitskennlinien koordiniert, so daß bei allen Helligkeitsübergängen die Fahrleuchten des Kraftfahrzeugs spätestens durch den Positionssensorschalter vor einer Tunneleinfahrt eingeschaltet werden.

Mit einem personal transmitter im Kraftfahrzeug kann der Lenker den Positionssensorschalter auch nach Gutdünken tagsüber einschalten, wobei die Einschaltdauer der Fahrleuchten vorgebbar ist.

## Beschreibung

Die Erfindung betrifft eine Vorrichtung zur automatischen Früherkennung einer einem Kraftfahrzeug im Zuge der Fahrbahn bevorstehenden Dunkelzone verbunden mit automatischem Aktivieren der Fahrleuchten von der Einfahrt bis zur Ausfahrt entsprechend dem Oberbegriff des Patentanspruchs 1.

Durch die EP 1 008 487 A1 ist bekannt, mit Photosensoren ausgerüstete Schalter einzusetzen zum vollautomatischen Schalten von Fahrleuchten, Standleuchten und Parkleuchten eines Kraftfahrzeugs in Abhängigkeit von der Umgebungshelligkeit.

Durch die DE 26 36 265 A1 ist bekannt, zusätzlich zu dem Photosensorschalter in einem Kraftfahrzeug noch einen zweiten Photosensorschalter einzusetzen zum Sensieren der Helligkeit in Fahrtrichtung und Einschalten der Fahrleuchten rechtzeitig vor der Einfahrt in eine geortete Dunkelzone. Dabei kann es Probleme geben, wenn, bedingt durch Verkehr, Straßen- und Wetterverhältnisse, das eine oder andere Mal nicht eingeschaltet wird oder Fehleinschaltungen vorkommen.

Aus Folge-Druckschriften sind diesbezügliche Weiterentwicklungen bekannt. Damit wird jedoch der Richtungs- Photosensorschalter erheblich aufwendiger und infolge der grösseren Anzahl von Bauteilen auch störungsanfälliger.

Durch die DE 196 20 779 C1 ist bekannt, als Sensor einer bevorstehenden Fahrbahndunkelzone einen im Kraftfahrzeug eingebauten Signalempfänger zu verwenden, wobei die Mittel zum Erzeugen der Positionssignale "... fahrbahnseitig beispielsweise als kurzreichweitige Sender vor einer Tunneleinfahrt und gegebenenfalls entlang der Tunnelstrecke positioniert sind." (Spalte 2, Zeilen 29 - 33)
Auch noch eine zweite Textstelle weist auf "fahrbahnseitig vor und in einem Tunnel positionierte Sender" hin. (Spalte 5, Zeilen 33 - 39) Schließlich ist der Sender-Aufstellungsort "fahrbahnseitig" als Lehre in den Patentanspruch 3 aufgenommen.

Die systembedingte Anordnung von Funksendern fahrbahnseitig in einem längeren Tunnel erforderte einen erheblichen Aufwand an Material und Wartung.
Der Empfang der Positionssignale eines seitlich der Fahrbahn aufgestellten Senders durch die Empfangsmittel eines Personenkraftwagens, der sich einem Tunnel im Wellenschatten eines großen Fernlasters nähert, kann problematisch sein. Auch kann ein seitlich der Fahrbahn errichteter Sender Positionssignale nur quer oder schräg zur Fahrbahnrichtung ausstreahlen.
Ein Kraftfahrzeuglenker kann tagsüber situationsbedingt die die Fahrleuchten einschalten, siehe Patentanspruch 2, und, auch situationsbedingt, vergessen, diese während einer längeren Fahrt wieder auszuschalten, wozu er den "Bedienerschalter" auf "LA" zurückstellen müßte, weil eine Vorrichtung zum automatischen Wiederausschalten der Fahrleuchten nach vorgebbarer Zeit fehlt.

Die Erfindung soll den einschlägigen Stand der Technik technisch und wirtschaftlich erheblich verbessern. Diese Erfindungsaufgabe wird durch die Merkmale des Patentanspruchs 1 sowie der Nebenansprüche 5 und 7 gelöst. Vorteilhafte Weiterbildungen der Erfindungen sind in den zugehörigen Unteransprüchen beschrieben. Die wesentlichen und auch vorteilhaften Merkmale der Erfindung bestehen u.a. in folgendem:

Mit nur einem, optimal über einer Tunneleinfahrt (31) postierten Sender von Positionssignalen bleiben die Fahrleuchten eines sich dem Tunnel nähernden Kraftfahrzeugs bis kurz nach der Ausfahrt eingeschaltet dank örtlich koordinierten Schaltens eines auf diepositionssignale reagierenden Positionssensorschalters und eines auf die Umgebungshelligkeit reagierenden Photosensorschalters, was z.B. die kontinuierliche Lichtspur (100) - (101) - (102) - (97) - (92) - (93) ergibt.

Die Betriebszeitbereiche des vorzugsweise mit Solarenergie betriebenen Positionssignalsenders einschließlich Positionssensorschalter und des Photosensorschalters sind nach Tageshelligkeitskennlinien koordiniert, so daß bei allen Helligkeitsübergängen im Tagesablauf die Fahrleuchten eines Kraftfahrzeugs spätestens durch den Positionssensorschalter vor einer Tunneleinfahrt eingeschaltet werden.

Mit einem personal transmitter im Kraftfahrzeug kann der Lenker den Positionssensorschalter auch nach Gutdünken tagsüber einschalten, wobei die Einschaltdauer der Fahrleuchten vorgebbar ist.

Anhand der Zeichnungen zu den Ausführungsbeispielen in den Figuren 1 bis 7 wird die Erfindung näher erläutert ; es zeigen:
- Fig. 1:: Schalt- und Stromlaufplan für Kfz.-Leuchten
- Fig. 2:: getrennte Ausführung von Photosensor- und Positionssensorschalter
- Fig. 3:: Straßentunnelanlage, Positionssignal-Sendeantenne im Scheitelbereich der die Fahrbahn überwölbenden Einfahtstunnelröhre
- Fig. 4:: örtliche Koordinierung des Schaltens von Positionssensor- und Photosensorschalter auf der Grundlage von Fig. 3
- Fig. 5:: Schaltplan und Schaltverbindung von Positionssignalsender und Solargenerator
- Fig. 6:: Kennlinie der Umgebungshelligkeit im Tagesablauf mit darauf koordinierten Betriebszeitbereichen
- Fig. 7:: Photosensorschalter zur Koordinierung von Betriebszeitbereichen in der Stromleitung von einer nicht solaren Energiequelle zum Signalsender
In den Schalt- und Stromlaufplänen sind zu Gunsten von.Anschaulichkeit und Übersichtlichkeit überwiegend elektromagnetische Schalter (Relais) eingezeichnet, wobei in der Praxis der Fachmann die zweckmäßigsten Bauelemente wählt.

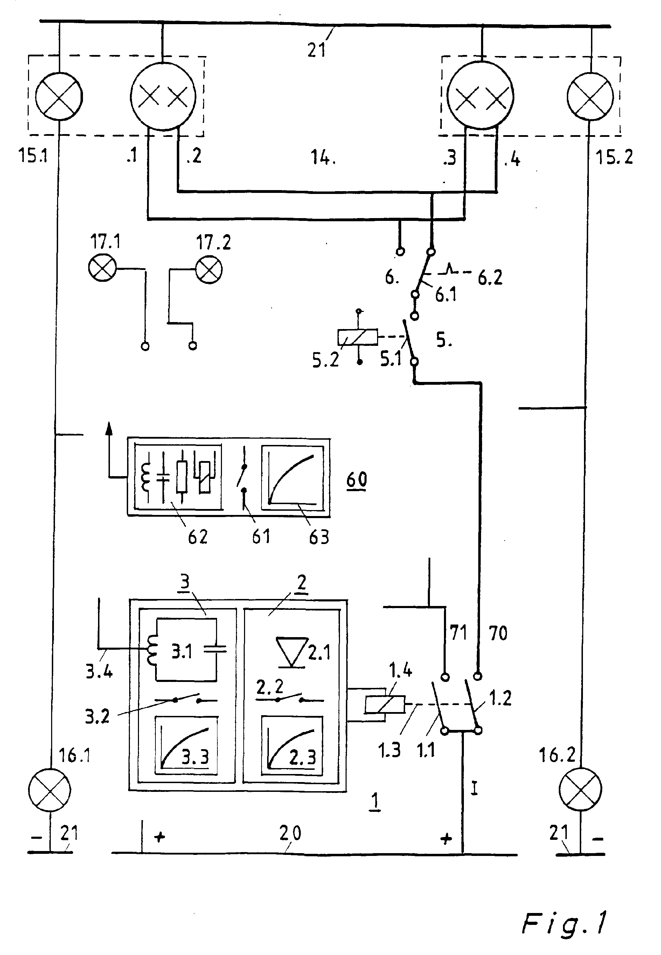

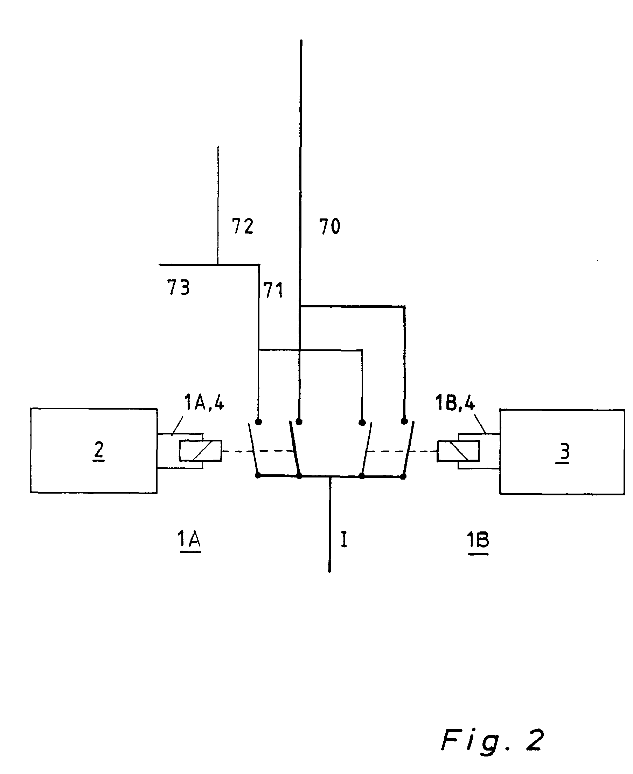

Im Steuerstromkreis 1.4 eines in der Stromzuleitung I angeordneten Schalters 1 auch mit Verteilerfunktion zu den Kraftfahrzeugfahrleuchten 14, 15, 16 sind eine Photosensorsteuervorrichtung 2 und eine Positionssensorsteuervorrichtung 3 angeordnet, Fig. 1. In einer Variante, Fig. 2, ist je eine der vorgenannten Steuervorrichtungen in je einen der Steuerstromkreise 1A.4 bzw. 1B.4 der Schalter 1A und 1B eingebaut. Jeweils ein Kontakt des Photosensorschalters 1A und ein Kontakt des Positionssensorschalters 1B sind parallelgeschaltet zum Schalten der Verteilerstromleitungen 70, 71, zu den Fahrleuchten.

Der Positionssensor ist durch einen Funkempfänger von Positionssignalen dargestellt, worauf ein Empfänger-Schwingkreis 3.1 und eine Dipol-Empfangsantenne 3.4 hinweisen. Dieser hat noch die Aufgabe, die empfangenen, hochfrequenten Positionssignale über die Position eines Kraftfahrzeugs vor einer Fahrbahndunkelzone in niederfrequente Arbeitssignale zur Auslösung des Positionsensorschalters zu verarbeiten. Der Photosensorschalter 2.1 ist als Photodiode dargestellt; zum Sensieren der Stärke des aus der Umgebung eingestrahlten Lichts können auch Photowiderstände oder Phototransistoren verwendet werden.

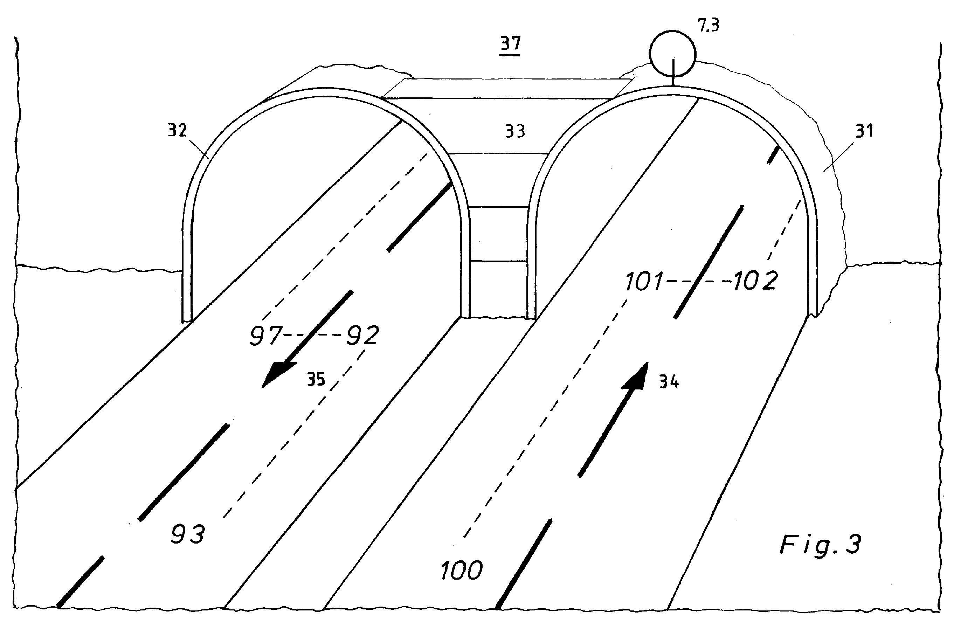

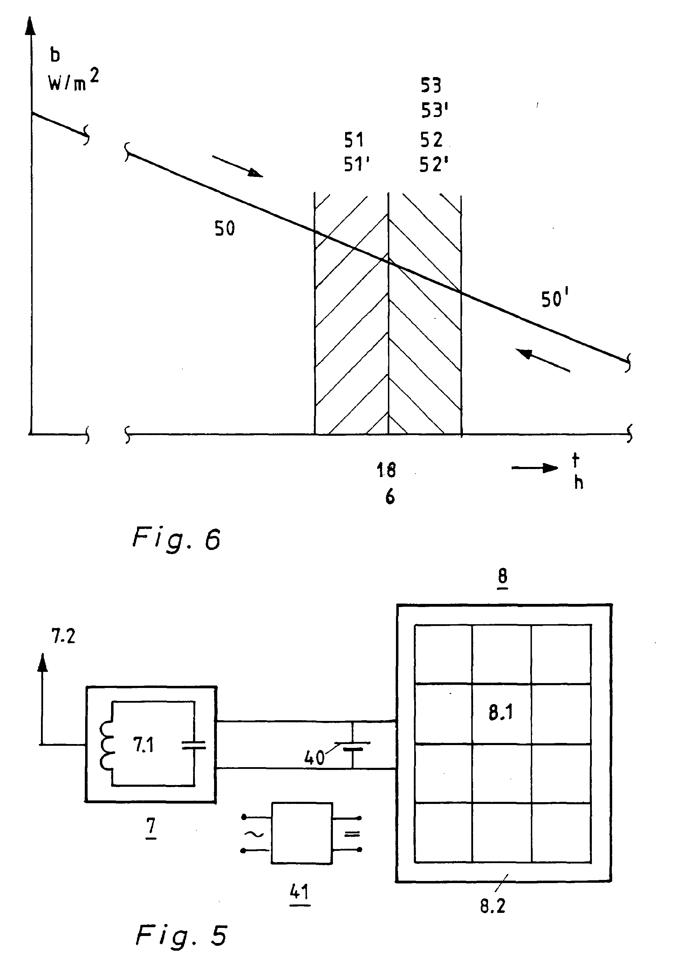

Die Funksignale zur Aktivierung der Positionssteuervorrichtung 3 zum Einschalten der Schalter 1,3 oder 1B in einem sich einer Fahrbahndunkelzone bei Tageslicht nähernden Kraftfahrzeug sendet ein außerhalb des Kraftfahrzeugs an einem geeigneten Ort stationär aufgestellter Sender 7, symbolhaft dargestellt durch einen Schwingkreis 7.1 und eine Dipol-Sendeantenne 7.2, Fig. 5. Die Wellenlänge der Positionssignale liegt unterhalb von 1 m oder oberhalb von 300 MHz. Diese Wellen breiten sich ähnlich Lichtwellen aus und können, z.B. durch eine Parabolspiegel-Antenne 7.3, Fig. 3, gebündelt, was auch Energie spart, in Richtung auf den entgegenkommenden Verkehr ausgestrahlt werden.
Das in ein Arbeitssignal transformierte Positionssignal des Senders 7 löst im Steuerstromkreis 1.4 oder 1B.4 den Schalter 3.2 aus, Fig. 1, zur Betätigung des Schalters 1 oder 1B.

Als vergleichsweise besonders günstiger Aufstellungsort zumindest für die Sendeantenne des Positionssignalsenders erweisen sich Front- und Anfangsbereich eines durch eine Tunnelröhre oder durch zwei Tunnelröhren 31, 32 mit Stützmauer 33 gebildetes Tunnelbauwerk 37, Fig. 3. Auch eine einem Tunnelbauwerk vorgelagerte, nicht dargestellte Signalbrücke über der Fahrbahn ist vorteilhafterweise als Sendeantennen-Standort geeignet. Aus dieser Sendeposition hoch über der Fahrbahn, z.B. 34, können ohne Aufwand für einen Sendemast die Positionssignale mit Richtwirkung ausgestrahlt und von den Positionssensoren der auf den Tunnel zufahrenden Kraftfahrzeuge unbehindert empfangen werden. Gegebenenfalls ist die Antenne in das Informationsschild über die Tunnelhöhe eingebunden.

Die Betriebsenergie des Senders 7 liefert ein Solargenerator 8, dessen Solarzellen 8.1 auf einer Palette 8.2 angeordnet sind, Fig. 5. Damit können sie auf maximale Tageslichteinstrahlung ausgerichtet werden. Die elektrische Energie wird dem Sender direkt oder über einen Frequenz-Spannungswandler 41 zugeführt. Eine Stützbatterie 40 kann nützlich sein.

Das Schalten von Positionssensorschalter und Photosensorschalter bei Einfahrt und Ausfahrt eines Kraftfahrzeugs in einen bzw. aus einem Tunnel erfolgt koordiniert; dafür gibt es zwei Möglichkeiten.

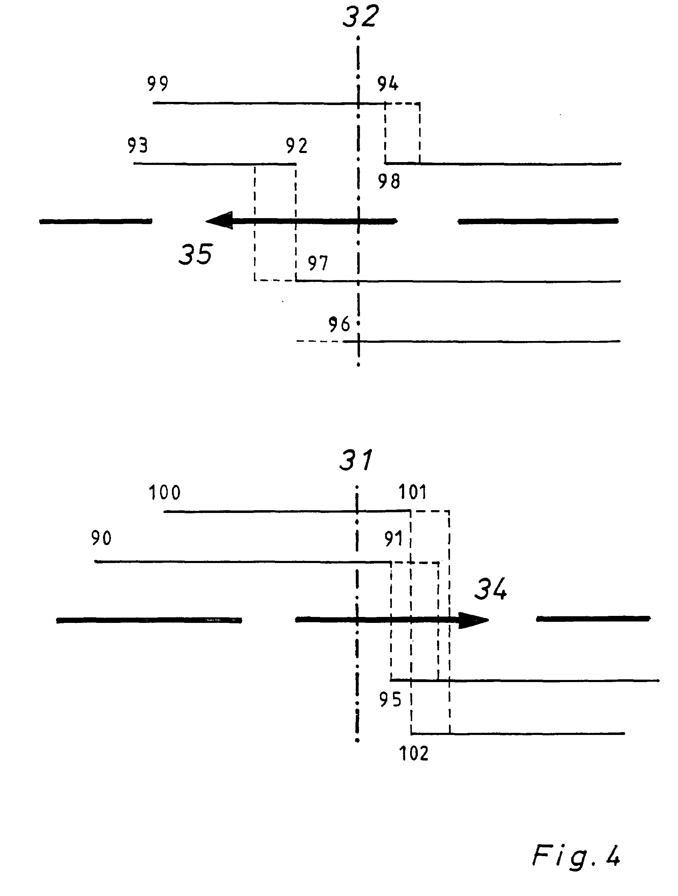

Die eine Möglichkeit sieht vor: Mittels einer nicht dargestellten Modifikation der Sendeantenne 7.2 und/oder 7.3 oder einer nicht dargestellten zusätzlichen Sendeantenne über der Tunneleinfahrt 31 oder im Tunnel-Einfahrtsbereich reichen die Positionssignale des Senders eine bestimmte Strecke in die Tunnelröhre hinein, so daß der Positionssensorschalter frühestens an dem (experimentel zu ermittelnden) Ort ausschaltet 91, an dem der Photosensorschalter infolge der einen Ansprechwert unterschreitenden Umgebungshelligkeit die Kraftfahrzeug-Fahrleuchten einschaltet 95, Fig. 4. Und mittels einer über der Ausfahrt aus dem Tunnel 32 angeordneten Sendeantenne, gegebenenfalls an einen eigenen Sender angeschlossen, beides nicht dargestellt, reichen die ausgestrahlten Positionssignale eine bestimmte Strecke in den Endbereich der Tunnelröhre hinein, so daß der Positionssensorschalter spätestens an dem Ort einschaltet 94, an dem der Photosensorschalter infolge einer den Ansprechwert überschreitenden Umgebungshelligkeit die Fahrleuchten ausschaltet 98, Fig. 4.

Die andere Möglichkeit sieht vor: zunächst sind Positionssensorschalter und Photosensorschalter mit je einer Ausschaltverzögerungsvorrichtung 3.3 bzw. 2.3 ausgestattet, angedeutet durch eine Graphik den Anstieg eines Stroms oder einer Spannung zeigend, wobei nach einer bestimmten Zeit, der vorgegebenen Verzögerungsdauer, der zugehörige Strom- oder Spannungswert den verzögerten Schaltvorgang auslöst, Fig. 1. Wenn im Einfahrtsbereich des Tunnels die Positionssignale bereits so schwach sind, daß der Positionssensorschalter ausschaltet, während der Photosensorschalter noch nicht eingeschaltet hat, weil es noch zu hell ist, wird das Ausschalten des Positionssensorschalters mindestens solange verzögert 101 des Positionssensorschalters mindestens solange verzögert 101 bis zufolge der einen Ansprechwert unterschreitenden Umgebungshelligkeit der Photosensorschalter einschaltet 102, Fig. 4. Damit während der Ausfahrt des Kraftfahrzeugs aus dem Tunnel in der zunehmenden Umgebungshelligkeit der Photosensorschalter nicht schon ausschaltet und kurz darauf der evtl. in den Wirkungsbereich der Positionssignale für die Gegenfahrbahn geratene Positionssensorschalter die Fahrleuchten wieder einschaltet, was als Blinksignal verstanden werden und irritieren kann, ist das Ausschalten des Photosensorschalters 97 mindestens bis zum Einsetzen der Positionssignale und Einschalten des Positionssensorschalters 92 verzögert, Fig. 4.

In einer Variante kann die Ausschaltverzögerung des Photosensorschalters auch selbständig und so eingestellt sein, daß die Fahrleuchten eines Kraftfahrzeugs mindestens bis zum Tunnelende eingeschaltet bleiben, 96, Fig. 4.

Zumindest die Ausschaltverzögerungsvorrichtung des Positionssensorschalters ist justierbar ausgeführt, damit der Kraftfahrzeuglenker das verzögerte Ausschalten eventuell noch besonderen Tunnelpassagen anpassen kann.

Die Zeitbereiche des helligkeitsabhängigen Schaltens des Photosensorschalters und eines auch helligkeitsabhängigen Senderbetriebs für Positionssignale und somit auch des Schaltens des Positionssensorschalters sind auf Kennlinien täglicher Helligkeitverläufe wie folgt koordiniert:

Während abnehmender Umgebungshelligkeit 50 deckt sich der Zeitbereich 52, in welchem Positionssignalsender und Positionssensorschalter den Betrieb bzw. das Schalten einstellen, mit dem Zeitbereich 51, in welchem der Photosensorschalter die Fahrleuchten einschaltet oder folgt letzterem Zeitbereich nach, Fig. 6.

Während zunehmender Umgebungshelligkeit 50' deckt sich der Zeitberich 52', in welchem Positionssignalsender und Positionssensorschalter den Betrieb bzw. das Schalten wieder aufnehmen, mit dem Zeitbereich 51', in welchem der Photosensorschalter ausschaltet, oder ist letzterem Zeitbereich vorgezogen, Fig. 6.

Bezogen auf die Helligkeits- Tageszeit- Kennlinien 50, 50', Fig. 6, schaltet also vor den Zeitbereichen 51, 51' des Schaltens des Photosensorschalters stets der Positionssensorschalter die Fahrleuchten ein vor der Einfahrt eines Kraftfahrzeugs in einen Straßentunnel, und nach vorgenannten Zeitbereichen erfolgt das Einschalten stets durch den Photosensorschalter.

Der Erläuterung der Koordination von Betriebszeiten in Fig. 6 liegen folgende vereinfachende Annahmen zu Grunde:

Kennlinien jeder Art abnehmender Tageshelligkeit, z.B. in der Dämmerung oder bei aufziehendem Gewitter, nehmen denselben Verlauf und Kennlinien jeder Art zunehmender Tageshelligkeit zeigen denselben Verlauf, und die beiden so erhaltenen Einheitskennlinien werden weiter reduziert auf ein und dieselbe Kennlinie für abnehmende 50 und zunehmende 50' Tageshelligkeit.
Die Zeitbereiche Einstellen: 52, 53 und Wiederaufnahme: 52', 53' des Senderbetriebs sowie Einschaltens durch den Positionssensorschalter und die Zeitbereiche Einschalten: 51 sowie Ausschalten: 51' des Photosensorschalters sind gleich groß, wobei vorgenannte Zeitbereiche auch durch Zeitpunkte dargestellt sein können.

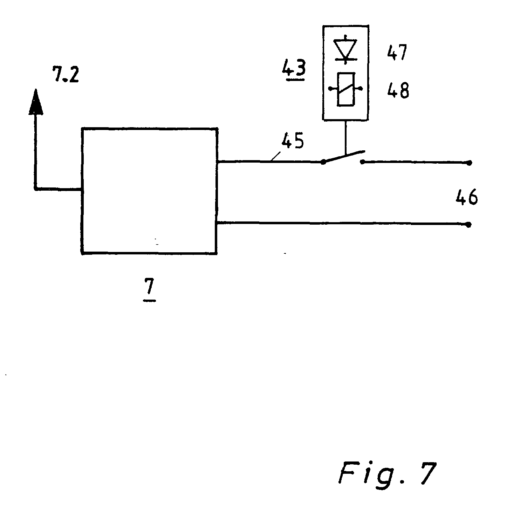

In der Stromleitung 45 von der Anschlußstelle 46 einer Energiequelle beliebiger Natur zum Sender 7 befindet sich ein Schalter 43, Fig. 7, dessen Steuervorrichtung im wesentlichen aus einem Photosensor 47 und einem Relais 48 besteht und wie folgt steuert:

Die Betriebszeitbereiche 53, 53' von Sender und Positionssensorschalter können dann mit den Betriebszeitbereichen 51, 51'des Photosensorschalters auf der Helligkeitskennlinie 50, 50' in gleicher Weise koordiniert werden wie für den mit Solarenergie gespeisten Sender bereits beschrieben, Fig. 6.

Für zeitlich befristetes Einschalten der Kraftfahrzeug-Fahrleuchten durch den Kraftfahrzeuglenker bei Tageshelligkeit eignen sich sowohl Photosensorschalter als Positionssensorschalter. Das Übertragen eines Einschaltkommandos an einen Aktivierungsschalter 61 in einem Steuerstromkreis 1.4, 1A.4 oder 1B.4 eines der vorgenannten Schalter erfolgt durch kapazitive, induktive oder ohmsche Kopplungsmittel und auch ein Relais kann verwendet werden - jeweils dargestellt durch das genormte Symbol, 62, Fig. 1. Im Fall des mechanischen Schalters 61 kann auch eine mechanische Kommandoübertragung vorteilhaft sein.

Nachdem der Positionssensorschalter mit einem Signalempfänger und Verarbeiter ausgestattet ist, kann das Einschalten der Fahrleuchten auch durch Betätigen eines im Kraftfahrzeug angeordneten Senders mit der Sendefrequenz der Positionssignale erfolgen, wobei die Ausstrahlung der Interventionssignale maximal auf den Nahbereich um das Kraftfahrzeug begrenzt ist. Der Interventionssignalsender ist als selbständige Bau- und Einbaueinheit ausgebildet; angedeutet ist diese Einbaueinheit durch die zusammengefaßten Symbole wesentlicher Senderbauteile, ergänzt durch das Sendeantennensymbol,60, Fig. 1.

Bei den vorgenannten Verfahren zum individuellen Einschalten der Fahrleuchten wird mit dem Einschalten eine Vorrichtung in Gang gesetzt, die nach einstellbarer Dauer die Intervention aufhebt, angedeutet durch die Graphik 63 in 60, Fig. 1. Bei dem Interventionssignalsender ist die Ausschaltverzögerungsvorrichtung in diesen integriert und z.B. durch die eingestellte Betriebsdauer gegeben.

## Patentansprüche

1. Kraftfahrzeugfahrleuchten- Helligkeits- und Positionssensorschaltautomatik mit Interventionsmitteln, bestehend aus kraftfahrzeugseitigen Mitteln (1), (1A) zum Schalten von Kraftfahrzeugleuchten abhängig von der Umgebungshelligkeit, umgebungsseitigen Mitteln (7) zum Erzeugen von Positionssignalen hinsichtlich einer Fahrbahndunkelzone (37), kraftfahrzeugseitigen Mitteln (3) für den Empfang der Positionssignale, **gekennzeichnet durch** folgende Merkmale:
eine Photosensorsteuervorrichtung (2) und eine Positionssensorsteuervorrichtung (3) sind im Steuerstromkreis (1.4) eines in einer Stromleitung (I) zu den Kraftfahrzeugfahrleuchten (14), (15), (16) installierten Photosensor- Positionssensorschalters (1) angeordnet, oder die Photosensorsteuervorrichtung (2) ist im Steuerstromkreis (1A.4) eines Photosensorschalters (1A) und die Positionssteuervorrichtung (3) ist im Steuerstromkreis (1B.4) eines Positionssensorschalters (1B) angeordnet, wobei die Schalter (1A), (1B) in elektrischer Parallelschaltung in der Stromleitung zu den Fahrleuchten installiert sind;
bei der Einfahrt (34), (31) eines Kraftfahrzeugs in die Fahrbahndunkelzone ist ein Einschalten des Photosensorschalters (95), (102) mit einem Ausschalten des Positionssensorschalters (91), (101) und bei der Ausfahrt (32), (35) des Kraftfahrzeugs aus der Fahrbahndunkelzone ist ein Ausschalten des Photosensorschalters (96) mit dem Passieren des Ausfahrtbereichs , oder ist ein Ausschalten des Photosensorschalters (97), (989 mit einem Einschalten des Positionssensorschalters (92), (94) so koordiniert, daß von einer Annäherung (90), (100) des Kraftfahrzeugs an die Fahrbahndunkelzone bis zu einer Entfernung davon (96), (93), (99) die Fahrleuchten ununterbrochen eingeschaltet bleiben, wobei der Positionssensorschalter auf sensierte Fahrbahndunkelzonen-Positionssignale reagiert.

2. Fahrleuchtenschaltautomatik nach Anspruch 1, **gekennzeichnet durch** folgende Merkmale:
in den Anfangsbereich der Fahrbahndunkelzone reichen Positionssignale soweit hinein, daß das Ausschalten des Positionssensorschalters (91) frühestens am Ort des Einschaltens des Photosensorschalters (95) erfolgt, und in den Endbereich der Fahrbahndunkelzone reichen Positionssignale soweit hinein, daß das Einschalten des Positionssensorschalters (94) spätestens am Ort des Ausschaltens des Photosensorschalters (98) erfolgt.

3. Fahrleuchtenschaltautomatik nach Anspruch 1, **gekennzeichnet durch** folgende Merkmale:
die Photosensorsteuervorrichtung (2) und die Positionssensorsteuervorrichtung (3) sind mit je einer Schaltverzögerungsvorrichtung (2.3) bzw. (3.3) ausgestattet, womit bei der Einfahrt in die Fahrbahndunkelzone ein Ausschalten des Positionssensorschalters (101) mindestens bis zum Einschalten des Photosensorschalters (102) verzögert wird, und bei der Ausfahrt aus der Fahrbahndunkelzone ein Ausschalten des Photosensorschalters (96) mindestens bis zum Ende der Fahrbahndunkelzone (32), oder ein Ausschalten des Photosensorschalters (97) mindestens bis zum Einschalten des Positionssensorschalters (92).

4. Fahrleuchtenschaltautomatik nach Anspruch 1, **gekennzeichnet durch** folgende Merkmale:
für ein Einschalten der Fahrleuchten **durch** den Kraftfahrzeuglenker ist kraftfahrzeugseitig ein im Bedarfsfall **durch** den Lenker in Betrieb zu setzender Sender (60) mit der Sendefrequenz des Positionssignalsenders (7) zur Einschalt-Aktivierung des Positionssensorschalters (1) oder (1B) angeordnet, wobei der Wirkungsbereich der Signale des Interventionssignalsenders sich maximal auf den Nahbereich um das Kraftfahrzeug erstreckt und Mittel (63) vorgesehen sind für ein automatisches Ausschalten der Fahrleuchten nach einer vorbestimmten Einschaltdauer.

5. Kraftfahrzeugfahrleuchten- Helligkeits- und Positionssensorschaltautomatik mit Interventionsschalter, bestehend aus kraftfahrzeugseitigen Mitteln (1), (1A) zum Schalten von Kraftfahrzeugleuchten abhängig von der Umgebungshelligkeit, umgebungsseitigen Mitteln (7) für das Erzeugen von Positionssignalen hinsichtlich einer Fahrbahndunkelzone (37), kraftfahrzeugseitigen Mitteln (3) für den Empfang der Positionssignale, **gekennzeichnet durch** folgende Merkmale:
zumindest Sendeantennenmittel (7.2), (7.3) zum Ausstrahlen von **durch** einen Funksender (7) erzeugten Positionssignalen hinweisend auf eine Fahrbahndunkelzone sind an einem Dunkelzonen- Bauwerk oder Vorbauwerk (37) im Front- oder Anfangsbereich mindestens in Durchfahrtshöhe über Fahrbahnen (34), (35) angeordnet.

6. Fahrleuchtenschaltautomatik nach Anspruch 5, **gekennzeichnet durch** folgende Merkmale:
die Sendeantennenmittel sind als Sendeantenne mit Richtwirkung (7.3) ausgebildet und im Front- oder Anfangsbereich eines Fahrbahnen (34), (35) überdeckeckenden Dunkelzonenbauwerks (37) so angeordnet, daß die Positionssignale zumindest aus der Durchfahrtshöhe zumindest überwiegend in Richtung auf Einfahrtsfahrbahnen (34) in die Dunkelzone ausgestrahlt werden.

7. Kraftfahrzeugfahrleuchten- Helligkeits- und Positionssensorschaltautomatik mit Interventionsschalter, bestehend aus kraftfahrzeugseitigen Mitteln (1), (1A) zum Schalten von Kraftfahrzeugleuchten abhängig von der Umgebungshelligkeit, umgebungsseitigen Mitteln (7) für das Erzeugen von Positionssignalen hinsichtlich einer Fahrbahndunkelzone (37), kraftfahrzeugseitigen Mitteln (3) für den Empfang der Positionssignale, **gekennzeichnet durch** folgende Merkmale:
auf einer Kennlinie (50) abnehmender Umgebungshelligkeit sind Zeitbereiche (52), (53) aussetzender Energielieferung an einen Sender (7) von Positionssignalen und damit auch des nicht mehr Einschaltens der Fahrleuchten **durch** den Positionssensorschalter vor einer Fahrbahndunkelzone (37) mit dem Zeitbereich (51) des Einschaltens der Fahrleuchten **durch** den Photosensorschalter koordiniert, und auf einer Kennlinie (50') zunehmender Umgebungshelligkeit sind Zeitbereiche (52'), (53') einsetzender Energielieferung an den Sender (7) von Positionssignalen und damit auch des Einschaltens der Fahrleuchten **durch** den Positionssensorschalter vor einer Fahrbahndunkelzone (37) mit dem Zeitbereich (51') des Ausschaltens der Fahrleuchten **durch** den Photosensorschalter kordiniert, wobei diese Koordinierung so erfolgt, daß bei Übergängen der Umgebungshelligkeit im Tagesablauf die Fahrleuchten eines Kraftfahrzeugs vor der Einfahrt in eine Fahrbahndunkelzone spätestens **durch** den Positionssensor eingecshaltet werden.

8. Fahrleuchtenschaltautomatk nach Anspruch 7, **gekennzeichnet durch** folgende Merkmale:
die Betriebsenergie für den Positionssignalsender (7) liefert ein Solargenerator (8) ohne oder mit einer Stützbatterie (40), wobei während abnehmender Umgebungshelligkeit (50) der Zeitbereich (52), in welchem die zur Verfügung stehende elektrische Energie einen für den Senderbetrieb ausreichenden Wert unterschreitet und damit die Ausstrahlung der Positionssignale aussetzt, sich mit dem Zeitbereich (51), in welchem der Photosensorschalter bei Unterschreiten eines bestimmten Helligkeitswertes die Fahrleuchten einschaltet, deckt oder letzterem Zeitbereich nachfolgt, und während zunehmender Umgebungshelligkeit (50') der Zeitbereich (52'), in welchem die zur Verfügung stehende elektrische Energie auf für den Senderbetrieb ausreichende ansteigt und damit die Ausstrahlung der Positionssignale einsetzt, sich mit dem Zeitbereich (51'), in welchem der Photosensorschalter bei Überschreiten eines bestimmten Helligkeitswertes ausschaltet, deckt oder letzterem Zeitbereich vorgezogen ist.

9. Fahrleuchtenschaltautomatik nach Anspruch 7, **gekennzeichnet durch** folgende Merkmale:
in einer Stromleitung (45) von einer Quelle elektrischer Energie zum Sender (7) ist ein Schalter (43) angeordnet und mit einer Photosensorsteuerung (47), (48) ausgestattet, wobei während abnehmender Umgebungshelligkeit (50) der Zeitberich (53), in welchem die Energielieferung **durch** Ausschalten des Schalters (43) bei Unterschreiten eines bestimmten Helligkeitswertes und damit auch die Ausstrahlung von Positionssignalen aussetzen, sich mit dem Zeitbereich (51), in welchem der Photosensorschalter (1) oder (1A) bei Unterschreiten eines bestimmten Helligkeitswertes die Fahrleuchten einschaltet, deckt oder letzterem zeitbereich nachfolgt, und während zunehmender Umgebungshelligkeit der Zeitbereich (53'), in welchem die Energielieferung **durch** Einschalten des Schalters (43) bei Überschreiten eines bestimmten Helligkeitswertes einsetzt und damit auch die Ausstrahlung der Positionssignale, sich mit dem Zeitbereich (51'), in welchem der Photosensorschalter (1) oder (1A) bei Überschreiten eines bestimmten Helligkeitswertes die Fahrleuchten ausschaltet, deckt oder letzterem Zeitbereich vorgezogen ist.
